# EUROPÄISCHE PATENTSCHRIFT

(11) **EP 3 688 347 B1**
(45) Veröffentlichungstag und Bekanntmachung des Hinweises auf die Patenterteilung: **23.02.2022**
(21) Anmeldenummer: 18782329.9
(22) Anmeldetag: 19.09.2018
(51) Int. Cl.: F16K 1/44

(54) **EXPANSIONSVENTIL FÜR EINEN KÄLTE- ODER KLIMAKREISLAUF**
EXPANSION VALVE FOR A REFRIGERATION CIRCUIT OR AIR-CONDITIONING CIRCUIT
SOUPAPE DE DÉTENTE POUR CIRCUIT DE REFROIDISSEMENT OU DE CLIMATISATION

(30) Priorität: 28.09.2017 DE 102017122624
(43) Veröffentlichungstag der Anmeldung: 05.08.2020
(73) Patentinhaber: Pierburg GmbH, 41460 Neuss (DE)
(72) Erfinder: GERARDS, Hans, 52538 Gangelt (DE)
(74) Vertreter: terpatent Patentanwälte ter Smitten Eberlein-Van Hoof Rütten Daubert
(86) Internationale Anmeldenummer: PCT/EP2018/075378
(87) Internationale Veröffentlichungsnummer: WO 2019/063386

(56) Entgegenhaltungen:
- EP-A1- 3 163 224
- EP-B1- 3 077 712
- US-A- 3 150 687
- US-A- 4 095 742

## Beschreibung

Die Erfindung betrifft ein Expansionsventil für einen Kälte- oder Klimakreislauf mit einem Strömungsgehäuse mit einem Einlass und einem Auslass, einem Aktor, über den ein Regelkörper axial bewegbar ist, und mindestens einem ersten Durchströmungsquerschnitt zwischen dem Einlass und dem Auslass, der von einem Ventilsitz umgeben ist, und der mittels des Regelkörpers verschließbar und freigebbar ist.

Derartige Expansionsventile dienen dazu, den Druck des Arbeitsfluids durch Drosselung des zur Verfügung stehenden Durchströmungsquerschnitts zu verringern und das Volumen des Arbeitsfluids zu erhöhen, dieses also zu expandieren. Durch die Verwendung geregelter Expansionsventile kann dabei sowohl der Druckabfall und damit die Volumenzunahme geregelt werden als auch der Fluidstrom nahezu vollständig unterbrochen werden.

In Kälte- oder Klimakreisläufen werden diese Ventile vor den Verdampfern und hinter den Verflüssigern angeordnet. Durch die Volumenzunahme wird das Arbeitsfluid teilweise verdampft, während das noch flüssige Arbeitsfluid im Verdampfer Wärme aufnimmt, wodurch auch der flüssige Teil verdampft. Dieses nun gasförmige Arbeitsfluid wird einem Kompressor zugeführt und verdichtet, um anschließend im Verflüssiger wieder in den flüssigen Aggregatzustand umgewandelt zu werden, wodurch der geschlossene Kreislauf gebildet wird. Diesem Kreislauf kann entsprechend Wärme oder Kälte im Bereich der Verdampfer und Verflüssiger entnommen werden.

Aus der DE 35 24 921 A1 ist ein Expansionsventil bekannt, welches elektromagnetisch geregelt wird. Der Regelkörper dieses Ventils ist mit dem Anker verbunden oder einstückig mit diesem ausgebildet und an seinem mit dem Ventilsitz korrespondierenden Ende konisch geformt. Im Bereich des Ventilsitzes befindet sich zusätzlich eine schmale Nut, die einerseits einen Druckausgleich erzeugen soll und andererseits dazu führt, dass ein geringer stetiger Strom vom Einlass zum Auslass erfolgt.

Des Weiteren wird in der US 4,095,742 ein druckausgeglichenes pneumatisch aktuierbares Expansionsventil offenbart, bei dem der Druckausgleich über eine Längsbohrung im kolbenförmigen Regelkörper erreicht wird, durch die ein oberhalb des Regelkörpers gelegener Raum mit dem Raum unterhalb des Regelkörpers verbunden ist. Der Regelkörper weist ein Ventilglied auf, welches axial auf einen Ventilsitz aufsetzbar ist. Im Bereich des Einlasses weist der Regelkörper eine Einschnürung auf, wodurch auch bezüglich des Einlassdrucks am Regelkörper ein Druckausgleich erzielt wird. Dieses Ventil ist kompliziert im Aufbau und entsprechend schwierig herzustellen und zu montieren. Insbesondere existieren plötzliche Volumenerweiterungen, die zu Strömungsverlusten führen.

Zusätzlich wird in der US 3,150,687 ein Hochdruckdampfventil offenbart, welches einen zentralen Einlass aufweist, der mit einem Auslass über zwei oberhalb und unterhalb des Einlassraumes angeordnete Durchströmungsquerschnitte verbindbar ist, indem zwei auf einer Ventilstange angeordnete Regelkörper gemeinsam von je einem zugeordneten und den entsprechenden Durchströmungsquerschnitt umgebenden Ventilsitz abgehoben werden.

Bei mobilen Anwendungen, wie beim Thermomanagement batteriebetriebener Elektrofahrzeuge, ist es wünschenswert, dass eine Kreislaufumkehr bei gleichzeitiger Verhinderung von Volumensprüngen durchgeführt werden kann und die Stellkräfte des Aktors möglichst gering sind, um die Baugrößen reduzieren zu können.

Es stellt sich daher die Aufgabe, ein Expansionsventil zu schaffen, welches über die gesamte Lebensdauer nahezu vollständig absperrbar ist und druckausgeglichen arbeitet, so dass kleinere Steller verwendet werden können. Dieses soll möglichst wenig Bauraum benötigen und einem geringen Verschleiß unterliegen. Gleichzeitig soll ein guter Expansionseffekt des Fluids durch eine möglichst gute Verdüsung bei genauer Volumenstromregulierung erreicht werden, wobei Verluste durch Volumensprünge vermieden werden sollen. Gegenüber dem Kältemittel soll der Steller vollständig gekapselt werden.

Diese Aufgabe wird durch ein Expansionsventil mit den Merkmalen des Hauptanspruchs 1 gelöst.

Dadurch, dass ein zweiter Ventilsitz einen zweiten Durchströmungsquerschnitt zwischen dem Einlass und dem Auslass umgibt, wobei die beiden Durchströmungsquerschnitte durch den einen Regelkörper gemeinsam verschließbar und freigebbar sind und axial zwischen den beiden Ventilsitzen ein Ringspalt ausgebildet ist, wird ein Ventil geschaffen, auf dessen Regelkörper von beiden axialen Seiten der gleiche Druck wirkt. Beide Durchströmungsquerschnitte werden durch den einen Regelkörper geregelt und können gleichzeitig nahezu vollständig geschlossen werden. Durch die sehr kleinen zu regelnden Querschnitte entsteht ein sehr guter Verdüsungseffekt, so dass ein relativ hoher Anteil gasförmigen Fluids entsteht. Zusätzlich ist eine sehr genaue Volumenstromregelung möglich.

Vorzugsweise weist der Regelkörper einen kolbenförmigen Abschnitt auf, dessen Höhe mindestens dem Abstand zwischen den beiden Ventilsitzen entspricht und dessen Durchmesser dem Innendurchmesser der beiden Ventilsitze im Wesentlichen entspricht. So kann ein beinahe vollständiger Verschluss beider Durchströmungsquerschnitte mit dem einen Regelkörper erzielt werden. Auch wird eine sehr genaue Regelung bei kleiner Baugröße erreicht.

In einer bevorzugten Ausführungsform schließt sich an den kolbenförmigen Abschnitt ein in Richtung des Aktors konisch konturierter Abschnitt des Regelkörpers an. Beim Einführen dieses konisch konturierten Abschnitts in die Durchströmungsquerschnitte können sehr kleine Querschnitte freigelegt werden, wodurch eine sehr genaue Regelbarkeit des Volumenstroms auch bei kleinen Volumenströmen erreicht wird. Des Weiteren wird ein guter Düseneffekt erzielt, wodurch ein hoher Verdampfungsanteil des Kältemittels durch einen hohen Druckabfall beim Durchströmen der als Drosselstellen wirkenden Durchströmungsquerschnitte zwischen dem Regelkörper und dem zugehörigen Ventilsitz erreicht wird, ohne plötzliche Volumenerweiterungen vorzusehen, wodurch Verluste reduziert werden.

Vorzugsweise geht der Ringspalt nach radial außen in einen Ringkanal, der zwischen die Ventilsitze aufweisenden Ventilsitzgehäuseteilen ausgebildet ist, über, wodurch eine gleichmäßige Anströmung des Ringspaltes erzielt wird und somit eine gleichmäßige Durchströmung der Durchströmungsquerschnitte bei Öffnung des Ventils. Auch dies fördert die Genauigkeit der Regelung und verhindert Verluste durch plötzliche Entspannung.

Um nach dem Durchströmen dieser Querschnitte die Strömung nicht plötzlich zu entspannen und keine erhöhte Wirbelbildung zu erzeugen, nimmt der Innendurchmesser der Ventilsitzgehäuseteile mit wachsendem Abstand voneinander düsenförmig zu, so dass eine allmähliche Volumenzunahme entsteht.

Vorzugsweise ist der Ringkanal mit dem Einlass verbunden und der Auslass ist mit einem ersten Raum, der an der zum zweiten Ventilsitzgehäuseteil axial entfernten Seite des ersten Ventilsitzgehäuseteils ausgebildet ist und einem zweiten Raum an der zum ersten Ventilsitzgehäuseteil axial entfernten Seite des zweiten Ventilsitzgehäuseteils ausgebildet ist, verbunden oder der Ringkanal ist mit dem Auslass verbunden und der Einlass ist mit dem ersten Raum, der an der zum zweiten Ventilsitzgehäuseteil axial entfernten Seite des ersten Ventilsitzgehäuseteils ausgebildet ist und dem zweiten Raum an der zum ersten Ventilsitzgehäuseteil axial entfernten Seite des zweiten Ventilsitzgehäuseteils ausgebildet ist, verbunden. Entsprechend kann dieses Ventil in beide Richtungen durchströmt werden, wobei unabhängig von der Durchströmungsrichtung eine energieverlustarme Expansion ermöglicht wird.

Des Weiteren ist es vorteilhaft, wenn die Ventilsitzgehäuseteile in einer Axialbohrung des Strömungsgehäuses aufeinander aufliegend angeordnet sind und die Axialbohrung durch ein Zwischengehäuseteil verschlossen ist, über welches die Ventilsitzgehäuseteile in ihrer Position axial gehalten sind. Die Montage und die Herstellung des Ventilgehäuses mit den Ventilsitzgehäuseteilen werden durch eine derartige Ausführung erheblich vereinfacht.

In einer hierzu weiterführenden Ausführungsform ist in dem Zwischengehäuseteil eine Bohrung ausgebildet, durch die eine Ventilstange ragt, welche über eine in der Bohrung angeordnete Führungsbuchse gelagert ist und an deren Ende der Regelkörper angeordnet ist. Ein Kippen der Ventilstange zum Ventilsitz kann durch eine derartige Ausführung zuverlässig vermieden werden. so dass ein Klemmen des Ventils weitestgehend ausgeschlossen werden kann.

Vorzugsweise ist der Aktor ein elektromagnetischer Aktor mit einem axial beweglichen Anker, der mit der Ventilstange verbunden ist. Elektromagnetische Aktoren ermöglichen eine sehr genaue Regelung, sind robust im Aufbau und ermöglichen hohe Stellkräfte, welche unabhängig vom Lastzustand des Fahrzeugs sind.

Zum Einnehmen einer fail-safe Position nimmt das Zwischengehäuseteil eine Schraubenfeder auf, über welche der Regelkörper in Schließrichtung belastet ist, so dass bei Ausfall der elektrischen Versorgung des Elektromagneten auch der Kältemittelkreislauf unterbrochen wird.

Zum Erreichen noch schnellerer Stellzeiten des Aktors sind Ankerbewegungsräume an den axialen Enden des Ankers belüftet. Entsprechend wird in den Ankerbewegungsräumen vorhandenes Gas beim Verstellen nicht komprimiert oder durch Spalte gedrückt, sondern kann die Räume unmittelbar verlassen.

Eine einfache Montage ergibt sich auch dadurch, dass der elektromagnetische Aktor unter Zwischenlage einer Dichtung am Zwischengehäuseteil durch Schrauben befestigt ist.

Es wird somit ein Expansionsventil geschaffen, welches sehr genau und schnell schaltbar ist sowie einfach herzustellen und zu montieren ist. Durch die genaue Regelung und die kleinen verwirklichten Spalte wird ein sehr guter Verdüsungseffekt mit einem hohen Anteil der gewünschten Änderung des Aggregatzustands des Fluids erreicht, da auch die auftretenden Energieverluste unabhängig von der Durchströmungsrichtung sehr gering sind.

Ein Ausführungsbeispiel eines erfindungsgemäßen Expansionsventils für einen Kälte-oder Klimakreislauf ist in den Figuren dargestellt und wird nachfolgend beschrieben.
Figur 1 zeigt eine Seitenansicht eines erfindungsgemäßen Expansionsventils in geschnittener Darstellung.

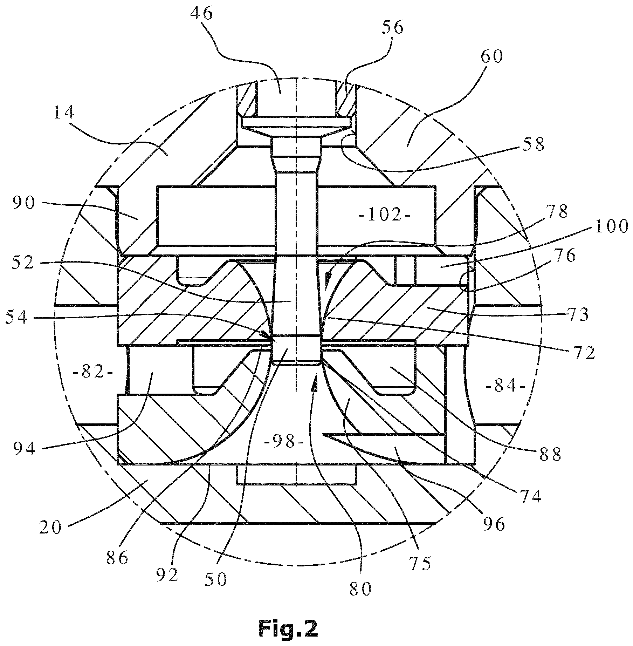

Figur 2 zeigt einen vergrößerten Ausschnitt des Expansionsventils aus Figur 1 im Bereich A.

Das erfindungsgemäße Expansionsventil weist einen elektromagnetischen Aktor 10 mit einem Aktorgehäuse 12 auf, welches an einem

Zwischengehäuseteil 14 befestigt unter Zwischenlage einer Dichtung 16 mittels Schrauben 18 ist, und an dessen entgegengesetzter Seite ein Strömungsgehäuse 20 des Expansionsventils ebenfalls unter Zwischenlage einer Dichtung 22 befestigt ist.

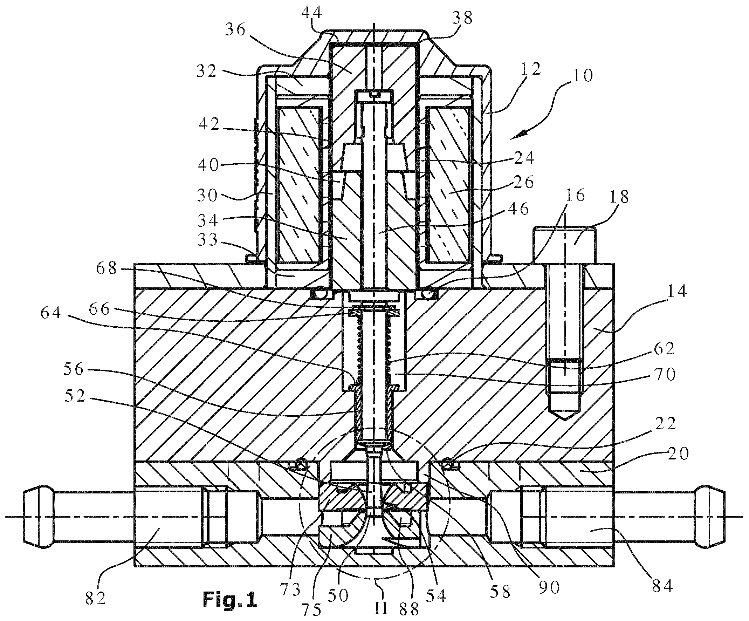

Der elektromagnetische Aktor 10 weist eine auf einen Spulenkörper 24 gewickelte Spule 26 auf, welche über einen nicht sichtbaren Stecker mit einer Spannungsquelle verbunden werden kann. Die durch die Spule 26 zu erzeugende elektromagnetische Kraft wird über ein Joch 30, Rückschlussbleche 32, 33 und einen Kern 34 auf einen axial beweglichen Anker 36 übertragen, der am zum Strömungsgehäuse 20 entgegengesetzten Ende des Kerns 34 angeordnet ist und in dessen Richtung der Anker 36 bei Bestromung in bekannter Weise gezogen wird. Zusätzlich kann im Bereich des Steckers ein magnetoresistiver Sensor angeordnet werden, welcher mit einem mit dem Anker 36 bewegbaren Magneten zur Lagerückmeldung korrespondiert. Die Ankerbewegungsräume 38, 40 axial beidseits des Ankers 36, in die dieser je nach Stellung gezogen wird, sind entweder jeweils über eine Bohrung mit dem Außenbereich des Aktors 10 verbunden oder über einen ausreichend breiten Kanal miteinander verbunden, um die Stellzeiten des Aktors 10 zu verkürzen. Der Anker 36 wird in einer Gleithülse 42 geführt, welche im Innern des Rückschlussblechs 32, das sich in das Innere des Spulenkörpers 24 vom zwischen dem Stecker 28 und dem Spulenkörper 24 angeordneten axialen Ende in das Innere des Spulenkörpers 24 erstreckt, befestigt ist. Im nicht bestromten Zustand, der in der Figur 1 dargestellt ist, liegt der Anker 36 mit seinem zum Stecker 28 weisenden axialen Ende gegen einen nicht magnetisierbaren Anschlag 44 der Gleithülse 42 an, wodurch die Position des Ankers 36 in diesem nicht bestromten Zustand eindeutig definiert ist. Um einen dichten Verschluss des elektromagnetischen Aktors 10 gegenüber dem Strömungsgehäuse 20 und dem Zwischengehäuseteil 14 herzustellen, ist der Anker 36 an der zum Strömungsgehäuse 20 entgegengesetzten axialen Seite des Kerns 34 angeordnet, wodurch der Kern 34 dichtend im Rückschlussblech 33 befestigt werden kann und somit zur Abdichtung gegenüber dem zu regelnden Fluid dient.

In einer zentralen Bohrung des Ankers 36 ist eine Ventilstange 46 eingepresst, welche den Kern 34 in Richtung des Strömungsgehäuses 20 durchdringt in einer zentralen Bohrung des Kerns 34 befestigt ist. Die Ventilstange 46 setzt sich durch das Zwischengehäuseteil 14 bis in das Strömungsgehäuse 20 fort und weist an ihrem im Strömungsgehäuse 20 gelegenen axialen Ende einen kolbenförmigen Abschnitt 50 auf, an den sich ein in Richtung des Zwischengehäuseteils 14 konisch konturierter Abschnitt 52 anschließt, wobei die Abschnitte 50, 52 als Regelkörper 54 des Expansionsventils dienen.

Der im Zwischengehäuseteil 14 angeordnete Teil der Ventilstange 46 ist in einer Führungsbuchse 56 geführt, die in einer zentralen Bohrung 58 des Zwischengehäuseteils 14 angeordnet ist. eine Schraubenfeder 62 liegt einerseits an einer Auflagefläche 64 der Gleithülse 56 an und andererseits der Schraubenfeder 62 une der Platte 66 ist im Zwischengehäuseteil 14 ein dem Kern 34 gegenüberliegender Aufnahmeraum 70 ausgebildet.

Der Regelkörper 54 korrespondiert erfindungsgemäß mit einem ersten Ventilsitz 72, der am Innendurchmesser eines ersten Ventilsitzgehäuseteils 73 ausgebildet ist und einem zweiten Ventilsitz 74, der am Innendurchmesser eines zweiten Ventilsitzgehäuseteils 75 ausgebildet ist. Diese sind in einer Axialbohrung 76 im Strömungsgehäuse 20 befestigt und weisen jeweils einen inneren Durchmesser auf, der im Wesentlichen dem Durchmesser des kolbenförmigen Abschnitts 50 des Regelkörpers 54 entspricht, so dass der kolbenförmige Abschnitt 50 im unbestromten Zustand des Aktors 10 sowohl einen ersten Durchströmungsquerschnitt 78 des ersten Ventilsitzes 72 als auch einen Durchströmungsquerschnitt 80 des zweiten Ventilsitzes 74 verschließt. Bei Bestromung des Aktors 10 wird der kolbenförmige Abschnitt 50 des Regelkörpers 54 aus den Ventilsitzen 72, 74 hinausgeschoben, so dass spaltförmige Durchströmungsquerschnitte 78, 80 zwischen dem konisch konturierten Abschnitt 52 des Regelkörpers 54 und den Ventilsitzen 72, 74 freigegeben werden. Um dies zu erreichen, beträgt die axiale Höhe des kolbenförmigen Abschnitts 52 mindestens dem axialen Abstand der beiden Ventilsitze 72, 74 zueinander. Die Ventilsitzgehäuseteile 73, 75 weisen jeweils am Innendurchmesser eine Düsenform auf, so dass sich der innere Durchmesser von den Ventilsitzen 72, 74 aus an den Ventilsitzgehäuseteilen 73, 75 mit wachsendem Abstand zueinander düsenförmig erweitern.

Die Ventilsitzgehäuseteile 73, 75 sind strömungstechnisch zwischen einem Einlass 82 und einem Auslass 84 angeordnet. Vom Einlass 82 gelangt das zu regelnde Fluid in einen Ringspalt 86, der axial zwischen den beiden Ventilsitzen 72, 74 ausgebildet ist. Unmittelbar radial angrenzend erweitert sich dieser Ringspalt 86 in einen umliegenden Ringkanal 88, in dem sich zunächst das vom Einlass 82 zuströmende Fluid verteilt, bevor es bei Öffnung des Expansionsventils über den Ringspalt 86 und gleichmäßig über den Umfang des Regelkörpers 54 verteilt zum Auslass 84 strömt.

Die beiden Ventilsitzgehäuseteile 73, 75 werden über einen ringförmigen Vorsprung 90, der sich vom Zwischengehäuseteil 14 in das Strömungsgehäuse 20 erstreckt auf einen Boden 92 der Axialbohrung 76 gedrückt und dort aufeinander liegend gehalten. Damit das Fluid in den Ringkanal 88 gelangen kann, der zwischen den Ventilsitzgehäuseteilen 73, 75 ausgebildet ist, weist das zweite Ventilsitzgehäuseteil 75 eine zum Einlass 82 gerichtete Ausnehmung 94 auf. Eine weitere Ausnehmung 96 ist am axial und radial gegenüberliegenden Ende des Ventilsitzgehäuseteils 75 ausgebildet, wodurch eine fluidische Verbindung von einem Raum 98 zwischen dem Boden 92 und dem düsenförmigen Bereich des zweiten Ventilsitzgehäuseteils 75 zum Auslass 84 hergestellt wird. Am ersten Ventilsitzgehäuseteil 73 ist ebenfalls zur Herstellung einer fluidischen Verbindung zum Auslass 84 am vom zweiten Ventilsitzgehäuseteil 75 entfernten axialen Ende und radial an der zum Auslass 84 gerichteten Seite eine Ausnehmung 100 angeordnet, über die ein zwischen dem ersten düsenförmigen Abschnitt des ersten Ventilsitzgehäuseteils 73 und der Axialbohrung 76 gebildeter Raum 102 mit dem Auslass 84 verbunden ist.

Bei Nichtbestromung der Spule 26 liegt der Regelkörper 54 mit seinem kolbenförmigen Abschnitt 50 radial an den beiden Ventilsitzen 72, 74 an, so dass eine Verbindung zwischen dem Einlass 82 und dem Auslass 84 gesperrt ist. Bei Bestromung wird der Anker 36 entgegen der Federkraft in Richtung der Ventilsitze 72, 74 bewegt, so dass sich der kolbenförmige Abschnitt 50 von den Ventilsitzen 72, 74 entfernt und der konisch konturierte Abschnitt 52 des Regelkörpers 54 in den Raum zwischen den Ventilsitzen 72, 74 geschoben wird. Entsprechend entsteht ein ringförmiger Spalt zwischen dem konisch konturierten Abschnitt 52 und den Ventilsitzen 72, 74. Hierdurch kann Fluid vom Einlass 82 über den Ringkanal 88 und den Ringspalt 86 in die beiden Räume 98, 102 strömen und erfährt hinter dem Spalt eine Volumenzunahme, wodurch das Fluid teilweise verdampft. Über die Ausnehmungen 96, 100 kann das Fluid anschließend teilweise im flüssigen und teilweise im dampfförmigen Aggregatzustand das Expansionsventil über den Auslass 84 verlassen.

Dabei werden Verluste durch eine plötzliche Entspannung des Fluids aufgrund der gleichmäßigen Anströmung über den Ringkanal und die gleichförmige Erweiterung über die düsenförmigen Abschnitte vermieden. Es wird somit ein die Verdüsung verbesserndes Expansionsventil geschaffen, welches einfach zu montieren und herzustellen ist.

Es sollte deutlich sein, dass dieses Ventil auch in umgekehrter Richtung durchströmt werden kann, ohne dass höhere Verluste entstehen, da auch in umgekehrter Richtung lediglich allmähliche Volumenvergrößerungen zur Verfügung gestellt werden.

## Patentansprüche

1. Expansionsventil für einen Kälte- oder Klimakreislauf mit
einem Strömungsgehäuse (20) mit einem Einlass (82), einem Auslass (84), einem Regelkörper (54) und einem Aktor (10), über den der Regelkörper (54) axial bewegbar ist, mindestens einem ersten Durchströmungsquerschnitt (78) zwischen dem Einlass (82) und dem Auslass (84), der von einem Ventilsitz (72) umgeben ist, und der mittels des Regelkörpers (54) verschließbar und freigebbar ist,
wobei ein zweiter Ventilsitz (74) einen zweiten Durchströmungsquerschnitt (80) zwischen dem Einlass (82) und dem Auslass (84) umgibt, wobei die beiden Durchströmungsquerschnitte (78, 80) durch den einen Regelkörper (54) gemeinsam verschließbar und freigebbar sind und axial zwischen den beiden Ventilsitzen (72, 74) ein Ringspalt (86) ausgebildet ist.

2. Expansionsventil für einen Kälte- oder Klimakreislauf nach Anspruch 1, wobei der Regelkörper (54) einen kolbenförmigen Abschnitt (50) aufweist, dessen Höhe mindestens dem Abstand zwischen den beiden Ventilsitzen (72, 74) entspricht und dessen Durchmesser dem Innendurchmesser der beiden Ventilsitze (72, 74) im Wesentlichen entspricht.

3. Expansionsventil für einen Kälte- oder Klimakreislauf nach Anspruch 2, wobei sich an den kolbenförmigen Abschnitt (50) ein in Richtung des Aktors (10) konisch konturierter Abschnitt (52) des Regelkörpers (54) anschließt.

4. Expansionsventil für einen Kälte- oder Klimakreislauf nach einem der vorhergehenden Ansprüche, wobei der Ringspalt (86) nach radial außen in einen Ringkanal (88), der zwischen die Ventilsitze (72, 74) aufweisenden Ventilsitzgehäuseteilen (73, 75) ausgebildet ist, übergeht.

5. Expansionsventil für einen Kälte- oder Klimakreislauf nach Anspruch 4, wobei der Innendurchmesser der Ventilsitzgehäuseteile (73, 75) mit wachsendem Abstand voneinander düsenförmig zunimmt.

6. Expansionsventil für einen Kälte- oder Klimakreislauf nach einem der vorhergehenden Ansprüche, wobei der Ringkanal (88) mit dem Einlass (82) verbunden ist und der Auslass (84) mit einem ersten Raum (102), der an der zum zweiten Ventilsitzgehäuseteil (75) axial entfernten Seite des ersten Ventilsitzgehäuseteils (73) ausgebildet ist und einem zweiten Raum (98) an der zum ersten Ventilsitzgehäuseteil (73) axial entfernten Seite des zweiten Ventilsitzgehäuseteils (75) ausgebildet ist, verbunden ist oder der Ringkanal (88) mit dem Auslass (84) verbunden ist und der Einlass (82) mit dem ersten Raum (102), der an der zum zweiten Ventilsitzgehäuseteil (75) axial entfernten Seite des ersten Ventilsitzgehäuseteils (73) ausgebildet ist und dem zweiten Raum (98) an der zum ersten Ventilsitzgehäuseteil (73) axial entfernten Seite des zweiten Ventilsitzgehäuseteils (75) ausgebildet ist, verbunden ist.

7. Expansionsventil für einen Kälte- oder Klimakreislauf nach einem der vorhergehenden Ansprüche, wobei die Ventilsitzgehäuseteile (73, 75) in einer Axialbohrung (76) des Strömungsgehäuses (20) aufeinander aufliegend angeordnet sind und die Axialbohrung (76) durch ein Zwischengehäuseteil (14) verschlossen ist, über welches die Ventilsitzgehäuseteile (73, 75) in ihrer Position axial gehalten sind.

8. Expansionsventil für einen Kälte- oder Klimakreislauf nach Anspruch 7, wobei in dem Zwischengehäuseteil (14) eine Bohrung (58) ausgebildet ist, durch die eine Ventilstange (46) ragt, welche über eine in der Bohrung (58) angeordnete Führungsbuchse (56) gelagert ist und an deren Ende der Regelkörper (54) angeordnet ist.

9. Expansionsventil für einen Kälte- oder Klimakreislauf nach Anspruch 8, wobei der Aktor (10) ein elektromagnetischer Aktor mit einem axial beweglichen Anker (36) ist, der mit der Ventilstange (46) verbunden ist.

10. Expansionsventil für einen Kälte- oder Klimakreislauf nach einem der Ansprüche 8 oder 9, wobei das Zwischengehäuseteil (14) eine Schraubenfeder (62) aufnimmt, über welche der Regelkörper (54) in Schließrichtung belastet ist.

11. Expansionsventil für einen Kälte- oder Klimakreislauf nach einem der vorhergehenden Ansprüche, wobei Ankerbewegungsräume (38, 40) an den axialen Enden des Ankers (36) belüftet sind.

12. Expansionsventil für einen Kälte- oder Klimakreislauf nach einem der Ansprüche 9 bis 11, wobei der elektromagnetische Aktor (10) unter Zwischenlage einer Dichtung (16) am Zwischengehäuseteil (14) durch Schrauben (18) befestigt ist.

## Claims

1. Expansion valve for a refrigeration or air conditioning circuit with a flow housing (20) with an inlet (82), an outlet (84), a control body (54) and an actuator (10) via which the control body (54) can be moved axially,
at least a first flow cross-section (78) between the inlet (82) and the outlet (84), which is surrounded by a valve seat (72) and which can be closed and opened via the control body (54)
wherein a second valve seat (74) surrounds a second flow cross-section (80) between the inlet (82) and the outlet (84), wherein the two flow cross-sections (78, 80) can be closed and opened together via the one control body (54) and an annular gap (86) is formed axially between the two valve seats (72, 74).

2. Expansion valve for a refrigeration or air-conditioning circuit according to claim 1,
wherein
the control body (54) has a piston-shaped section (50) whose height corresponds at least to the distance between the two valve seats (72, 74) and whose diameter corresponds substantially to the inside diameter of the two valve seats (72, 74).

3. Expansion valve for a refrigeration or air conditioning circuit according to claim 2,
wherein
a section (52) of the control body (54), which is conically contoured, adjoins the piston-shaped section (50) in the direction of the actuator (10).

4. Expansion valve for a refrigeration or air conditioning circuit according to any one of the preceding claims,
wherein
the annular gap (86) merges radially outwardly into an annular channel (88) formed between valve seat housing parts (73, 75) comprising the valve seats (72, 74).

5. Expansion valve for a refrigeration or air conditioning circuit according to claim 4,
wherein
the inner diameter of the valve seat housing parts (73, 75) increases in a nozzle-shaped manner with increasing distance from one another.

6. Expansion valve for a refrigeration or air conditioning circuit according to any one of the preceding claims,
wherein
the annular channel (88) is connected to the inlet (82) and the outlet (84) is connected to a first space (102) formed on the side of the first valve seat housing part (73) axially remote from the second valve seat housing part (75) and a second space (98) formed on the side of the second valve seat housing part (75) axially remote from the first valve seat housing part (73), or the annular passage (88) is connected to the outlet (84) and the inlet (82) is connected to the first space (102) formed on the side of the first valve seat housing part (73) axially remote from the second valve seat housing part (75) and to the second space (98) formed on the side of the second valve seat housing part (75) axially remote from the first valve seat housing part (73).

7. Expansion valve for a refrigeration or air conditioning circuit according to any one of the preceding claims,
wherein
the valve seat housing parts (73, 75) are arranged to rest on one another in an axial bore (76) of the flow housing (20), and the axial bore (76) is closed by an intermediate housing part (14) via which the valve seat housing parts (73, 75) are held axially in position.

8. Expansion valve for a refrigeration or air conditioning circuit according to claim 7,
wherein
a bore (58) is formed in the intermediate housing part (14), through which a valve rod (46) projects, which is supported via a guide bush (56) arranged in the bore (58) and at the end of which the control body (54) is arranged.

9. Expansion valve for a refrigeration or air conditioning circuit according to claim 8,
wherein
the actuator (10) is a solenoidt actuator with an axially movable armature (36) which is connected to the valve rod (46).

10. Expansion valve for a refrigeration or air conditioning circuit according to any one of claims 8 or 9,
wherein
the intermediate housing part (14) accommodates a helical spring (62) via which the control body (54) is loaded in the closing direction.

11. Expansion valve for a refrigeration or air conditioning circuit according to any one of the preceding claims,
wherein
armature movement spaces (38, 40) at the axial ends of the armature (36) are vented.

12. Expansion valve for a refrigeration or air conditioning circuit according to any one of claims 9 to 11,
wherein
the solenoid actuator (10) is fastened to the intermediate housing part (14) by screws (18) with the interposition of a seal (16).

## Revendications

1. Détendeur pour un circuit de réfrigération ou de climatisation, comprenant
un boîtier d'écoulement (20) avec une entrée (82), une sortie (84), un corps de régulation (54) et un actionneur (10) par lequel le corps de régulation (54) peut être déplacé axialement,
au moins une première section de passage (78) entre l'entrée (82) et la sortie (84), qui est entourée par un siège de soupape (72) et qui peut être fermée et libérée au moyen du corps de régulation (54), et
un deuxième siège de soupape (74) entoure une deuxième section transversale de passage (80) entre l'entrée (82) et la sortie (84), les deux sections transversales de passage (78, 80) pouvant être fermées et libérées ensemble par le seul corps de régulation (54) et un interstice annulaire (86) étant formé axialement entre les deux sièges de soupape (72, 74).

2. Détendeur pour un circuit de réfrigération ou de climatisation selon la revendication 1, dans lequel
le corps de régulation (54) présente une section en forme de piston (50) dont la hauteur correspond au moins à la distance entre les deux sièges de soupape (72, 74) et dont le diamètre correspond sensiblement au diamètre intérieur des deux sièges de soupape (72, 74).

3. Détendeur pour un circuit de réfrigération ou de climatisation selon la revendication 2, dans lequel
la section en forme de piston (50) est suivie d'une section (52) du corps de régulation (54) dont le contour est conique en direction de l'actionneur (10).

4. Détendeur pour un circuit de réfrigération ou de climatisation selon l'une des revendications précédentes, dans lequel
la fente annulaire (86) se prolonge radialement vers l'extérieur par un canal annulaire (88) qui est formé entre des parties de boîtier de siège de soupape (73, 75) présentant les sièges de soupape (72, 74).

5. Détendeur pour un circuit de réfrigération ou de climatisation selon la revendication 4, dans lequel
le diamètre intérieur des parties de logement de siège de soupape (73, 75) augmente en forme de buse à mesure que la distance entre elles augmente.

6. Détendeur pour un circuit de réfrigération ou de climatisation selon l'une quelconque des revendications précédentes, dans lequel
le canal annulaire (88) est relié à l'entrée (82) et la sortie (84) est reliée à un premier espace (102) formé sur le côté de la première partie de corps de siège de soupape (73) éloigné axialement de la deuxième partie de corps de siège de soupape (75) et à un deuxième espace (98) formé sur le côté de la deuxième partie de corps de siège de soupape (75) éloigné axialement de la première partie de corps de siège de soupape (73), ou le passage annulaire (88) est relié à la sortie (84) et l'entrée (82) est reliée au premier espace (102) formé sur le côté de la première partie de boîtier de siège de soupape (73) éloigné axialement de la seconde partie de boîtier de siège de soupape (75) et au second espace (98) formé sur le côté de la seconde partie de boîtier de siège de soupape (75) éloigné axialement de la première partie de boîtier de siège de soupape (73).

7. Détendeur pour un circuit de réfrigération ou de climatisation selon l'une quelconque des revendications précédentes, dans lequel
les parties de boîtier de siège de soupape (73, 75) sont disposées en appui l'une sur l'autre dans un alésage axial (76) du boîtier d'écoulement (20) et l'alésage axial (76) est fermé par une partie de boîtier intermédiaire (14) par l'intermédiaire de laquelle les parties de boîtier de siège de soupape (73, 75) sont maintenues axialement dans leur position.

8. Détendeur pour un circuit de réfrigération ou de climatisation selon la revendication 7, dans lequel
un alésage (58) est formé dans la partie de boîtier intermédiaire (14), à travers lequel s'étend une tige de soupape (46), qui est logée par une douille de guidage (56) disposée dans l'alésage (58) et à l'extrémité de laquelle est disposé le corps de régulation (54).

9. Détendeur pour un circuit de réfrigération ou de climatisation selon la revendication 8, dans lequel
l'actionneur (10) est un actionneur électromagnétique comportant une armature (36) mobile axialement et reliée à la tige (46) de la vanne.

10. Détendeur pour un circuit de réfrigération ou de climatisation selon l'une des revendications 8 ou 9, dans lequel
la partie de corps intermédiaire (14) reçoit un ressort hélicoïdal (62) par l'intermédiaire duquel le corps de régulation (54) est sollicité dans le sens de la fermeture.

11. Détendeur pour un circuit de réfrigération ou de climatisation selon l'une quelconque des revendications précédentes, dans lequel
des espaces de déplacement de l'induit (38, 40) sont ventilés aux extrémités axiales de l'induit (36).

12. Détendeur pour un circuit de réfrigération ou de climatisation selon l'une quelconque des revendications 9 à 11, dans lequel
l'actionneur électromagnétique (10) est fixé à la partie de corps intermédiaire (14) par des vis (18) avec interposition d'un joint d'étanchéité (16).
